# EUROPÄISCHE PATENTANMELDUNG

(11) **EP 0 544 937 A1**
(43) Veröffentlichungstag der Anmeldung: **09.06.1993**
(21) Anmeldenummer: 91120809.8
(22) Anmeldetag: 04.12.1991
(51) Int. Cl.: G01S 3/02, G01S 3/14, H01Q 1/32

(54) **Hochfrequenzpeiler für Kraftfahrzeuge**

(71) Anmelder: Rohde & Schwarz GmbH & Co. KG, D-81671 München (DE)
(72) Erfinder: Hämmerle, Richard, Dr.-Ing., W-8011 Kirchheim (DE)
(74) Vertreter: Graf, Walter, Dipl.-Ing.

(57) **Zusammenfassung**

Bei einem Hochfrequenzpeiler für Kraftfahrzeuge, bei dem über mehrere Antennen komplexe Meßspannungen und daraus Meßdatensätze gewonnen werden, aus denen dann durch Vergleich mit Musterdatensätzen, die unter Berücksichtigung der Fahrzeugstruktur durch ein vorhergehendes Eichverfahren gewonnen sind, die Einfallsrichtung eines zu peilenden Hochfrequenzsenders bestimmt wird, sind die Antennen von außen unsichtbar in unmittelbarer Nähe der Fahrzeugkarosserie angebracht; die analogen Empfangssignale dieser Antennen werden digitalisiert und durch Spektralanalyse wird das Signal/Rausch-Verhältnis dieser digitalen Empfangssignale verbessert; und aus diesen Empfangssignalen werden schließlich die Meß- und Musterdatensätze gewonnen.

## Beschreibung

Die Erfindung betrifft einen Hochfrequenzpeiler laut Oberbegriff des Patentanspruches.

Ein Hochfrequenzpeiler dieser Art ist bekannt (Europäische Patentanmeldung 0 363 619).

Die Antennen dieses bekannten Peilers können nicht vollständig unsichtbar in unmittelbarer Nähe der Oberflächenstruktur des Fahrzeugs angebracht sein, da sonst das Signal/Rausch-Verhältnis (S/N) am Ausgang dieser Antennen zu schlecht wird, um einwandfreie Peilergebnisse zu erreichen. Die Antennen des bekannten Peilers müssen deshalb mehr oder weniger sichtbar in von der Blechkarosserie des Fahrzeugs freien Bereichen angebracht werden, wie dies beispielsweise in der US-PS 4,003,057 gezeigt ist, hier sind dünne möglichst unsichtbare Antennendrähte an der Heckscheibe des Fahrzeugs als Antennen gespannt. Damit sind diese Antennen jedoch nicht vollständig unsichtbar und ein mit einem solchen Hochfrequenzpeiler ausgestattetes Kraftfahrzeug ist daher nicht optimal geeignet für die Verfolgung und Observation von Gegenständen oder Fahrzeugen, die mit einem Targetsender markiert sind, denn ein Verfolgter kann leicht über die Antennen erkennen, daß ihm ein Kraftfahrzeug folgt.

Es ist daher Aufgabe der Erfindung, einen Hochfrequenzpeiler für Verfolgungs-Kraftfahrzeuge zu schaffen, bei dem die Antennen völlig unsichtbar am Kraftfahrzeug angebracht sind.

Diese Aufgabe wird ausgehend von einem Hochfrequenzpeiler laut Oberbegriff des Hauptanspruches durch dessen kennzeichnende Merkmale gelöst. Vorteilhafte Weiterbildungen ergeben sich aus den Unteransprüchen.

Beim erfindungsgemäßen Hochfrequenzpeiler können die Antennen völlig verdeckt im Inneren des Kraftfahrzeuges in unmittelbarer Nähe der Metallkarosserie und hinter der Fahrzeug-Innenverkleidung angebracht werden, da das hierdurch entstehende schlechte S/N-Verhältnis der Ausgangsspannung dieser Antennen durch die anschließende Aufbereitung der Empfangssignale durch ein an sich bekanntes Spektralanalyseverfahren wesentlich verbessert wird, so daß die so im S/N-Verhältnis verbesserten digitalen Empfangssignale anschließend nach dem bekannten Mustererkennungsverfahren ausgewertet werden können, ohne daß Peilfehler zu befürchten sind. Zur Verbesserung des Signalrauschverhältnisses eignen sich alle üblichen Spektralanalyseverfahren, wie sie zwischenzeitlich zu anderen Zwecken in digitalen Hochfrequenzempfängern benutzt werden. Als besonders vorteilhaft ist hierfür das bekannte Verfahren zur schnellen Fouriertransformation (FFT) bzw. zur diskreten Fouriertransformation (DFT) geeignet, wie es beispielsweise in der Zeitschrift Frequenz 25 (1971) 9, S. 267,268 und 273-278 näher beschrieben ist. Aus den durch A/D-Wandlung digitalisierten Empfangssignalen der einzelnen Antennen von schlechtem S/N-Verhältnis wird beispielsweise unter Anwendung der FFT das Empfangssignal aus dem Gesamtspektrum herausgefiltert, in dessen Umgebung nur noch eine geringe Rauschleistung als Störsignal verbleibt. Die erreichbare S/N-Verbesserung hängt von der Abtastzeit T der FFT ab, je größer diese Abtastzeit ist um so enger werden die Abtastwerte im Frequenzbereich und um so besser wird damit das Signal/Rausch-Verhältnis S/N des Empfangssignals. Die Größe dieser möglichen Abtastzeit richtet sich nach der Dauer der empfangenen Signale, da bei den meisten zu verfolgenden Targetsendern, die an einem zu verfolgenden Fahrzeug angebracht sind und die durch den erfindungsgemäßen Peiler verfolgt werden sollen, gepulste Signale von nur kurzer Dauer gesendet werden, ist die mögliche Verbesserung des S/N-Verhältnisses durch diese Signaldauer begrenzt, sie reicht jedoch in der Praxis aus, um das Signal/Rausch-Verhältnis so zu verbessern, daß anschließend eine einwandfreie Peilauswertung möglich ist.

Bei einem erfindungsgemäßen Peiler können die Antennen wie gesagt völlig verdeckt und in unmittelbarer Nähe der Karosserieoberfläche angeordnet werden, als besonders vorteilhaft haben sich hierfür sogenannte Schleifenantennen geeignet, bei denen nur ein schmaler Metallstreifen in unmittelbarer Nähe von nur einigen Millimetern etwa parallel zur Oberfläche der Metallkarosserie des Kraftfahrzeugs angeordnet wird, beispielsweise an einem der Fensterholme des Kraftfahrzeugs, wobei dieser schmale Metallstreifen mit der gegenüberliegenden Metalloberfläche des Fahrzeugs eine übliche Schleifenantenne bildet, an deren Fußpunkt beispielsweise unmittelbar ein Verstärker eingebaut sein kann. Diese Schleifenantenne besitzt zwar wegen der unmittelbaren Nähe des einen Schleifenzweiges zur Metallkarosserie des Fahrzeugs ein schlechtes S/N-Verhältnis, das aber durch die anschließende Aufbereitung entsprechend verbessert werden kann.

Die Erfindung wird im folgenden anhand schematischer Zeichnungen an einem Ausführungsbeispiel näher erläutert.

Fig. 1 zeigt den Prinzipaufbau eines erfindungsgemäßen Peilers eingebaut in ein Kraftfahrzeug sowie Einzelheiten des Eichvorganges zur Ermittlung der Musterdatensätze.

Fig. 2 zeigt Details einer hierbei verwendeten Antenne.

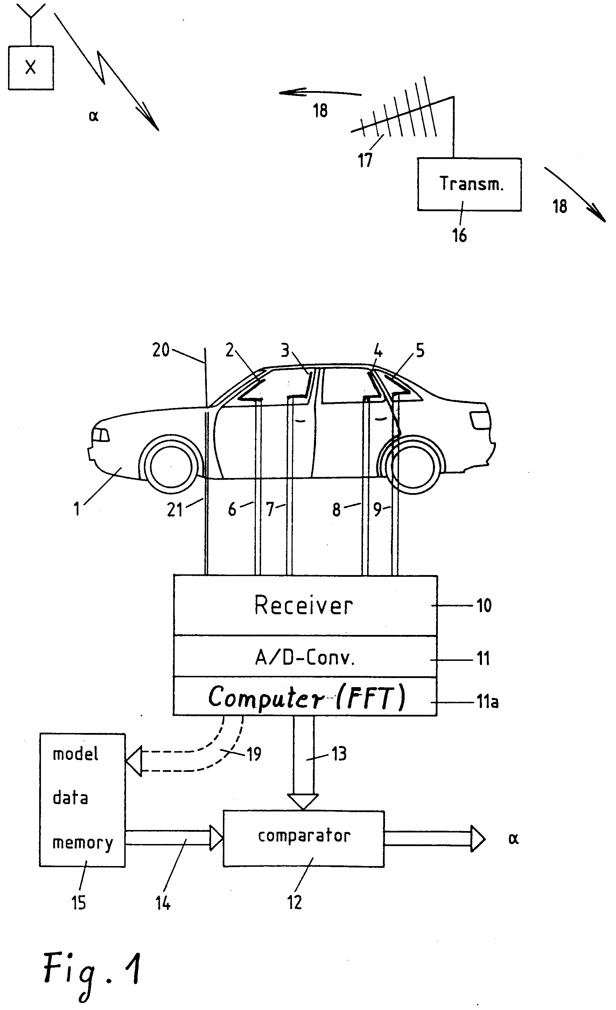

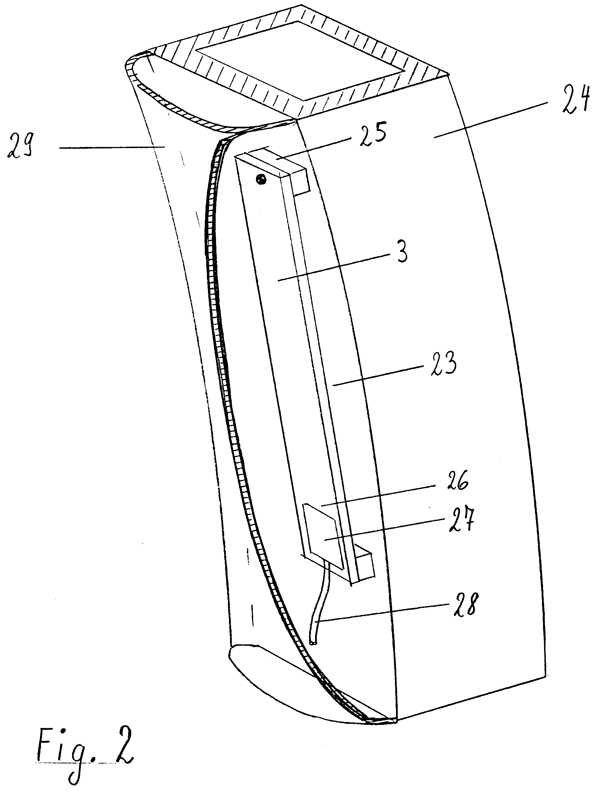

Fig. 1 zeigt ein übliches Kraftfahrzeug 1 mit einem eingebauten erfindungsgemäßen Hochfrequenzpeiler bestehend aus mehreren von außen völlig unsichtbar im Inneren des Kraftfahrzeugs angebrachten Antennen 2 bis 5 sowie einer sichtbaren Referenzantenne 20 sowie dem eigentlichen beispielsweise im Kofferraum untergebrachten Peilgerät 25. Mit einem so ausgestatteten Kraftfahrzeug 1 kann beispielsweise die Einfallsrichtung α eines Hochfrequenzsenders X, der beispielsweise als Targetsender an ein zu verfolgendes Fahrzeug angebracht ist, bestimmt werden. Die vier Antennen 2, 3, 4 und 5 sind beispielsweise etwa im Quadrat zueinander im Inneren des Kraftfahrzeuges 1 angebracht. Jede dieser Antennen ist vorzugsweise als Schleifenantenne ausgebildet. Fig. 2 zeigt am Beispiel der Antenne 3 Details dieser Schleifenantennen. Die Antenne 3 ist als schmaler Leiterstreifen ausgebildet, die im Abstand von nur einigen Millimetern über der Oberfläche 23 des Mittelholmes 24 des Fahrzeugs 1 angeordnet ist. Das obere Ende dieses Leiterstreifens 3 ist über eine Verbindung 25 galvanisch mit der Oberfläche 23 des Metallholmes 24 verbunden, das untere Ende 26 ist über einen Fußpunktverstärker 27 mit dem Innenleiter eines Koaxialkabels 28 verbunden, dessen Außenleiter mit der Oberfläche 23 galvanisch verbunden ist. Auf diese Weise wird durch den Leiterstreifen 3 und der ihm gegenüberliegenden Leiteroberfläche 23 eine übliche Schleifenantenne gebildet, die Schleifenfläche ist zwar wegen des geringen Abstandes gering, die Antenne kann jedoch völlig unsichtbar hinter der Innenverkleidung 29, die in Fig. 2 teilweise weggebrochen dargestellt ist, eingebaut werden.

Diese einzelnen hinter der Verkleidung des Kraftfahrzeug-Innenraumes völlig unsichtbar versteckt eingebauten Schleifenantennen 2, 3, 4 und 5 stehen über Koaxialkabel 6, 7, 8 und 9 mit den Eingängen eines Mehrkanal-Hochfrequenzempfängers 10 in Verbindung, die als übliche Autoradio-Antenne getarnte Referenzantenne 20 des Peilsystems ist über ein Koaxialkabel 21 mit dem Empfänger 10 verbunden. In dem Empfänger 10 werden die über die einzelnen Antennen 2, 3, 4, 5 und 20 empfangenen Analogsignale eines zu ortenden Senders X in eine niedrige Zwischenfrequenz umgesetzt, diese Zwischenfrequenzsignale werden anschließend in einem Analog/Digital-Wander 11 in entsprechende Digitalwerte umgesetzt, die dann in einem Rechner 11a einer Spektralanalyse unterworfen werden, um so das S/N-Verhältnis dieser einzelnen Empfangssignale zu verbessern. Die digitalen Empfangssignale der Antennen 2 bis 5 werden beispielsweise einer FFT unterworfen und auf diese Weise wird das S/N-Verhältnis der von diesen Antennen kommenen Empfangssignale verbessert. Eine andere Möglichkeit der Spektralanalyse-Behandlung besteht darin, zunächst nur das über die Referenzantenne 20 empfangene Signal einer FFT zu unterwerden und dadurch die Frequenz des vom Sender X empfangenen Signals genau zu bestimmen, bei dieser so festgestellten Frequenz kann dann anschließend sehr schnell eine DFT an den Empfangssignalen der Antennen 2 bis 5 durchgeführt werden.

Die so durch Spektralanalyse im S/N-Verhältnis verbesserten Eingangssignale werden dann über einen Rechner nach Betrag und Phase ausgewertet, die so ermittelten komplexen Größen der Empfangssignale werden auf das von der Referenzantenne 20 kommende Referenzsignal bezogen und diese so ermittelten Digitalwerte 13 werden dann einem Komparator 12 zugeführt, in welchem diese bei der Peilung eines unbekannten Senders X gewonnenen Meßdatensätze 13 mit Musterdatensätzen 14 verglichen werden, die in einem Musterdatenspeicher 15 abgespeichert sind. Durch Vergleich der Meßdatensätze 13 mit diesen Musterdatensätzen 14 im Komparator 12 wird die gewünschte Einfallsrichtung α des unbekannten Senders X ermittelt.

Die Musterdatensätze 14 im Speicher 15 werden durch einen vorhergehenden Eichvorgang mittels eines Eichsenders 16 gewonnen, der über seine Antenne 17 ein Hochfrequenz-Eichsignal abstrahlt. Die Frequenz des Hochfrequenz-Eichsignals ist im Sender 16 einstellbar. Der Sender 16 ist in Richtung der beiden Pfeile 18 um das Fahrzeug 1 heraum bewegbar. Beim Eichvorgang wird der Sender 16 um das Fahrzeug 1 herumbewegt und für jede Einfallsrichtung wird genauso wie bei dem vorher beschriebenen eigentlichen Peilvorgang aus den über die Antennen 2 bis 5 und 20 empfangenen Signalen ein Musterdatensatz 19 gewonnen, der während des Eichvorganges aus dem Rechner 11a zur Spektralanalyse unmittelbar in den Musterdatenspeicher 15 eingegeben und dort abgespeichert wird. Auch bei der Ermittlung der Musterdatensätze wird also die erfindungsgemäße S/N-Verbesserung durch Spektralanalyse angewendet.

## Patentansprüche

1. Hochfrequenzpeiler für Kraftfahrzeuge, bei dem über mehrere Antennen komplexe Meßspannungen und daraus Meßdatensätze gewonnen werden, aus denen durch Vergleich mit Musterdatensätzen, die unter Berücksichtigung der Fahrzeugstruktur durch ein vorhergehendes Eichverfahren gewonnen sind, die Einfallsrichtung eines zu peilenden Hochfrequenzsenders bestimmt wird, dadurch **gekennzeichnet,** daß die Antennen (2 bis 5) von außen unsichtbar in unmittelbarer Nähe der Fahrzeugkarosserie angebracht sind, die analogen Empfangssignale dieser Antennen (2 bis 5) digitalisiert und durch Spektralanalyse das Signal/Rausch-Verhältnis dieser digitalen Empfangssignale verbessert wird und aus diesen Empfangssignalen die Meß- und Musterdatensätze gewonnen werden.

2. Hochfrequenzpeiler nach Anspruch 1, dadurch **gekennzeichnet,** daß die Antennen durch Leiterstreifen (3) gebildet sind, die in geringem Abstand zur Karosserie-Oberfläche (23) des Kraftfahrzeugs angeordnet sind und die zusammen mit dieser Karosserie-Oberfläche (23) eine Schleifenantenne bilden.

3. Hochfrequenzpeiler nach Anspruch 2, dadurch **gekennzeichnet,** daß am freien Ende des Leiterstreifens (3) ein Fußpunktverstärker (27) integriert ist.

4. Hochfrequenzpeiler nach einem der vorhergehenden Ansprüche, dadurch **gekennzeichnet,** daß die digitalisierten Eingangssignale zur Verbesserung ihres Signal/Rausch-Verhältnisses einer schnellen Fourier-Transformation (FFT) oder einer diskreten Fourier-Transformation (DFT) unterworfen werden.

5. Hochfrequenzpeiler nach einem oder mehreren der vorhergehenden Ansprüche, dadurch **gekennzeichnet,** daß die Musterdatensätze für verschiedene Einfallsrichtungen durch einen einmaligen Eichvorgang mittels eine Hochfrequenz-Eichsenders, dessen Ort bekannt ist, gewonnen und gespeichert werden.
